# EUROPÄISCHE PATENTANMELDUNG

(11) **EP 4 737 995 A1**
(43) Veröffentlichungstag der Anmeldung: **06.05.2026**
(21) Anmeldenummer: 25205516.5
(22) Anmeldetag: 30.09.2025
(51) Int. Cl.: G02F 1/13357

(54) **ANZEIGEVORRICHTUNG MIT EINER HINTERGRUNDBELEUCHTUNG UND FORTBEWEGUNGSMITTEL MIT EINER SOLCHEN ANZEIGEVORRICHTUNG**

(30) Priorität: 29.10.2024 DE 102024210418
(71) Anmelder: AUMOVIO Germany GmbH, 60488 Frankfurt am Main (DE)
(72) Erfinder: Joseph, Manrico, 30175 Hannover (DE); Corona Estrada, Jose Juan, 30175 Hannover (DE)
(74) Vertreter: Aumovio Corporation

(57) **Zusammenfassung**

Die vorliegende Erfindung betrifft eine Hintergrundbeleuchtung (200) für eine Anzeigevorrichtung (10) sowie ein Fortbewegungsmittel (800) mit einer solchen Anzeigevorrichtung (10). Die Hintergrundbeleuchtung (200) für das Anzeigepaneel (100) weist einen Reflektor (230) mit einer Vielzahl von reflektierend ausgestalteten Kavitäten (233) aufweist, und eine Leiterplatte (210), die eine Vielzahl von Lichtquellen (220) aufweist. Die Lichtquellen (220) sind in den jeweiligen Kavitäten (233) des Reflektors (230) angeordneten, wobei der Reflektor (230) ein Befestigungselement (234) aufweist.

## Beschreibung

Die vorliegende Erfindung betrifft eine Anzeigevorrichtung mit einem Anzeigepaneel und einer Hintergrundbeleuchtung für das Anzeigepaneel sowie ein Fortbewegungsmittel mit einer solchen Anzeigevorrichtung. Derartige Anzeigevorrichtungen finden heutzutage in nahezu jedem Fortbewegungsmittel, beispielsweise einem Kraftfahrzeug, Anwendung.

Anzahl und Fläche von Anzeigevorrichtungen in Fortbewegungsmitteln steigen ständig an. Anzeigevorrichtungen sind beispielsweise als Kombiinstrument für den Fahrer, als Zentraldisplay und auch als Beifahrerdisplay im Markt anzutreffen. Nicht-selbstleuchtende transmissive Anzeigevorrichtung benötigen zur Bilddarstellung eine Hintergrundbeleuchtung. Aufgabe der Hintergrundbeleuchtung ist es dabei, das verwendete Anzeigepaneel so gleichmäßig wie möglich über die gesamte aktive Fläche zu beleuchten, um eine möglichst homogene Anzeige bis in den Randbereich zu erzeugen.

Hintergrundbeleuchtungen für Anzeigevorrichtungen basieren hierbei häufig auf Lichtleitern, in die das Licht von mehreren Lichtquellen (Leuchtdioden; engl. Light Emitting Diode, kurz LED) eingekoppelt wird. Das Licht breitet sich im Lichtleiter durch Totalreflexion aus und wird mithilfe von Mikrostrukturen am Lichtleiter wieder ausgekoppelt, sodass eine homogene Lichtverteilung entsteht. Diese Bauweise ermöglicht eine kompakte und effiziente Ausleuchtung von Anzeigepaneelen.

Als Alternative zu Hintergrundbeleuchtungen, die auf Lichtleitern basieren, können sogenannte Matrix-Hintergrundbeleuchtungen verwendet werden. Matrix-Hintergrundbeleuchtungen nutzen eine Vielzahl von in einer Matrix angeordneten Lichtquellen zur Lichterzeugung. Die Lichtquellen sind hierbei auf einer Leiterplatte angeordnet, die auf einem Gehäuse der Hintergrundbeleuchtung montiert ist. Matrix-Hintergrundbeleuchtungen verwenden in der Regel ein metallisches Gehäuse und einen Kunststoffreflektor. Das Gehäuse der Hintergrundbeleuchtung hat die Aufgabe, für Struktur zu sorgen und alle Komponenten der Hintergrundbeleuchtung im montierten Zustand zusammenzuhalten, damit die Hintergrundbeleuchtung als ein Bauteil im Gehäuse der Anzeigevorrichtung montiert werden kann. Der Reflektor der Hintergrundbeleuchtung hat eine spezielle Geometrie und weist eine Vielzahl von Kavitäten auf, die das von den Lichtquellen emittierte Licht in Richtung eines Anzeigepaneels lenkt. Dies erfordert einen gewissen Abstand zwischen den Lichtquellen und dem Displaypaneel der Anzeigevorrichtung, um das Licht zu homogenisieren. Wenn jedoch die Aufbauhöhe der Anzeigevorrichtung reduziert werden muss, was bei Automobilanwendungen immer häufiger der Fall ist, muss auch die Aufbauhöhe der Hintergrundbeleuchtungseinheit reduziert werden.

Dem Fachmann sind Anzeigevorrichtung mit einem Anzeigepaneel und einer Hintergrundbeleuchtung für das Anzeigepaneel in den unterschiedlichen Ausführungsformen bekannt. Beispielsweise beschreibt US 2010/141867 A1 eine solche Anzeigevorrichtung, wobei ein Anzeigepaneel oder dergleichen hinterleuchtet wird. Die Vorrichtung weist ein Anzeigepaneel und eine Hintergrundbeleuchtung für das Anzeigepaneel auf. Die Hintergrundbeleuchtung weist ein ebenes, lichtemittierendes Bauelement mit einer Vielzahl von Lichtquellen sowie einem über dem Bauelement angeordneten Reflektor mit einer Vielzahl von reflektierenden Kavitäten auf. Jeder der Kavitäten ist eine Lichtquelle zugeordnet. Das ebene, lichtemittierende Bauelement dient als Trägerplatte für die Hintergrundbeleuchtung.

Mit zunehmender Größe der Anzeigevorrichtungen nimmt auch die Größe der Hintergrundbeleuchtung immer weiter zu. Solch großen Hintergrundbeleuchtungen bestehen meist aus einer Mehrzahl zusammengesetzter Elemente, die miteinander verbunden werden. Neben einem Gehäuse für die Anzeigevorrichtung weist oft auch die Hintergrundbeleuchtung ein gesondertes Gehäuse zur Aufnahme einzelner Komponenten auf. Nachteilig dabei ist, dass das Gehäuse für die Hintergrundbeleuchtung zusätzliche Kosten in der Herstellung und Montage verursacht. Zudem besteht ein Nachteil darin, dass die Aufbauhöhe der Anzeigevorrichtung aufgrund des zusätzlichen Gehäuses für die Hintergrundbeleuchtung erhöht wird, was eine flachere Aufbauhöhe erschwert. Die Anzeigevorrichtung bzw. die Hintergrundbeleuchtung ist somit aufgrund ihrer Aufbauhöhe durch das zusätzliche Gehäuse der Hintergrundbeleuchtung nur begrenzt in Fahrzeugen mit einer geringen Einbauhöhe einsetzbar.

Der vorliegenden Erfindung liegt die Aufgabe zugrunde, eine verbesserte Anzeigevorrichtung mit einer Hintergrundbeleuchtung und ein Fortbewegungsmittel mit einer solchen Anzeigevorrichtung bereitzustellen, wobei eine sehr flache Aufbauhöhe der Hintergrundbeleuchtung und der Anzeigevorrichtung erreicht wird und weiterhin eine ausreichende Stabilität für die Hintergrundbeleuchtung und weiterhin eine gleichmäßige Ausleuchtung der Anzeigevorrichtung gewährleistet wird.

Diese Aufgabe wird erfindungsgemäß durch ein Anzeigevorrichtung gemäß dem Oberbegriff des unabhängigen Anspruchs 1 gemeinsam mit den Merkmalen des kennzeichnenden Teils des unabhängigen Anspruchs 1 und durch ein Fortbewegungsmittel gemäß dem Anspruch 7 gelöst. Vorteilhafte Ausgestaltungen der Erfindung sind Gegenstand der abhängigen Ansprüche.

Die Erfindung sieht eine Anzeigevorrichtung mit einem Anzeigepaneel und einer Hintergrundbeleuchtung für das Anzeigepaneel vor, wobei die Hintergrundbeleuchtung einen Reflektor mit einer Vielzahl von reflektierend ausgestalteten Kavitäten aufweist, und eine Leiterplatte, die eine Vielzahl von Lichtquellen aufweist, wobei die Lichtquellen in den jeweiligen Kavitäten des Reflektors angeordneten sind, wobei der Reflektor ein Befestigungselement aufweist.

Die Hintergrundbeleuchtung ist dabei zwischen einem Frontglas der Anzeigevorrichtung und dem darunter angeordneten Anzeigepaneel sowie einem Gehäuse der Anzeigevorrichtung angeordnet. Die Hintergrundbeleuchtung weist u.a. eine Leiterplatte mit darauf angeordneten Lichtquellen sowie einen Reflektor auf, wobei der Reflektor das aus den Lichtquellen austretende Licht in Richtung des Anzeigepaneels orientiert, so dass eine homogene Ausleuchtung des Anzeigepaneels erreicht wird. Der Reflektor ist mittels dem am Reflektor ausgebildeten Befestigungsmittel und einem zusätzlichen Verbindungsmittel auf eine Oberfläche des Frontglas montiert und dort gehalten.

Dies hat den Vorteil, dass die Hintergrundbeleuchtung mittels dem am Reflektor ausgebildeten Befestigungselement besonders einfach und schnell in eine Anzeigevorrichtung montiert sowie bei einem Defekt wieder ausgetauscht werden kann, ohne dass eine aufwendige Demontage, bspw. durch Lösen mehrerer einzelner Bauteile, entsteht. Durch den Reflektor mit dem Befestigungselement verrutscht dieser nicht, da der Reflektor und das Befestigungselement miteinander verbunden sind. Hierdurch bedarf es keiner nachträglichen Ausrichtung und Justierung des Reflektors, wodurch Kosten für eine zeitaufwändige Justierung nach der Montage des Reflektors eingespart werden.

Gemäß einem Aspekt der Erfindung sind der Reflektor und das Befestigungselement einstückig ausgebildet.

Ein Vorteil besteht darin, dass die einstückige Ausbildung des Reflektors mit dem Befestigungselement es ermöglicht, auch aufwendige Geometrien des Reflektors mit dünnen Wänden mit besonders hoher Qualität herzustellen, ohne dass der Reflektor an Stabilität aufgrund einer zusätzlichen Verbindungsstelle zwischen dem Reflektor und dem Befestigungselement verliert. Es werden keine zusätzlichen Montagemittel benötigt, welche weniger mechanisch stabil sind. Der Reflektor mit dem Befestigungselement kann einfach und schnell, beispielsweise in einem Spritzgussverfahren, hergestellt werden, wodurch Fertigungskosten für zusätzliche Fertigungsverfahren und Werkzeuge eingespart werden. Durch eine einstückige Ausbildung wird zudem die Anzahl der zu montierenden Komponenten und die hierzu benötigten Montagemittel reduziert und der Montageprozess vereinfacht.

Des Weiteren ist der einstückig ausgebildete Reflektor mit dem Befestigungselement besonders leicht, dennoch stark genug gegenüber anderen Lösungen, um eine ausreichende Stabilität, beispielsweise zur Aufnahme einer Leiterplatte und eines Wärmeleitblechs zu gewährleisten. Hierdurch wird kein weiteres Bauelement, zum Beispiel kein zusätzliches Gehäuse für die Hintergrundbeleuchtung, welches für eine Aufnahme der einzelnen Bauteile sowie für eine ausreichende Stabilität der Hintergrundbeleuchtung im montierten Zustand dient benötigt.

Ein weiterer Vorteil besteht darin, dass durch die Kombination der beiden Elemente, Reflektor und Montagemittel, zu einem einzigen Element, die Aufbauhöhe des Reflektors und somit die Aufbauhöhe der Hintergrundbeleuchtung verringert wird.

Gemäß einem Aspekt der Erfindung ist das Befestigungselement kraft- und/oder stoff- und/der formschlüssig mit einem Gehäuse verbindbar.

Unter einer kraftschlüssigen Verbindung ist eine mechanische Verbindung, bei der zwei oder mehr Bauteile durch die Wirkung von Kräften zusammengehalten werden, zu verstehen. Zu den typischen Anwendungen kraftschlüssiger Verbindungen, zum Verbinden eines Gehäuses mit einem Befestigungselement des Reflektors, gehört beispielsweise eine Schraubverbindung. Ein Vorteil besteht darin, dass eine Schraubverbindung besonders leicht und schnell herzustellen ist und die miteinander verbundenen Bauteile wieder zerstörungsfrei voneinander lösbar sind.

Unter einer stoffschlüssigen Verbindung ist eine Verbindung, bei der zwei oder mehr Bauteile durch atomare oder molekulare Kräfte zusammengehalten werden, zu verstehen. Zu den typischen Anwendungen stoffschlüssiger Verbindungen, zum Verbinden eines Gehäuses mit einem Befestigungselement des Reflektors, gehört beispielsweise eine Klebverbindung oder auch Laserschweißen. Ein Vorteil besteht darin, dass eine stoffschlüssige Verbindung zwischen den zu verbindenden Bauteilen hergestellt wird, welche besonders robust und stabil gegenüber einwirkenden Kräften sowie auch gegenüber einwirkenden Vibrationen ist. Hierbei handelt es sich um eine dauerhafte Verbindung. Dies hat den Vorteil, dass zum Verbinden der einzelnen Bauteile kein weiters Verbindungselement oder Verbindungsmittel benötigt wird.

Bei einer stoffschlüssigen Verbindung, bspw. durch Laserschweißen, kann das Gehäuse der Anzeigevorrichtung oder der damit zu verbindende Reflektor bzw. das Befestigungselement des Reflektors, beispielsweise aus einem lasertransparenten Material bestehen. Um das Gehäuse und das Befestigungselement im Laserschweißprozess zu verbinden, ist es notwendig, dass eines der beiden zu verbindenden Bauteile lasertransparent und das andere zu verbindende Bauteil laserabsorbierend ist. Ein Lasertransparentes Material hat den Vorteil, dass durch Laserschweißen eine sehr präzise, schnelle, flexible und saubere Verbindung mit höchsten Qualitätsstandards entsteht.

Unter einer formschlüssigen Verbindung ist eine Verbindung, bei der zwei oder mehr Bauteile aufgrund ihrer geometrischen Formen ineinander greifen oder zusammenpassen, zu verstehen. Zu den typischen Anwendungen formschlüssiger Verbindungen gehört beispielsweise eine Schnapphakenverbindung oder auch eine Nietverbindung. Eine formschlüssige Verbindung mittels eines Niets wird mit einem kaltgeschlagenen Niet hergestellt, wobei der Niet aus einem Kunststoff besteht. Das Befestigungselement des Reflektors kann hierbei bspw. eine oder mehrere Nieten aufweisen, wobei das Befestigungselement und der Niet einstückig ausgebildet und aus einem Material, bevorzugt Kunststoff, hergestellt sind. Ein Vorteil besteht darin, dass eine formschlüssige Verbindung zwischen den zu verbindenden Bauteilen, dem Befestigungselement und dem Gehäuse besonders leicht und schnell herzustellen ist. Zudem kann eine formschlüssige Verbindung auf einfache Weise wieder schnell gelöst werden, wobei die wesentlichen Bauteile unzerstört bleiben und wiederverwendbar sind.

Neben denen zuvor aufgeführten Verbindungstechniken für eine kraft-, form- und stoffschlüssige Verbindung des Gehäuses mit dem Montagemittel des Reflektors sind auch andere hier nicht aufgeführte Verbindungstechniken oder eine Kombination von Verbindungstechniken möglich.

Gemäß einem Aspekt der Erfindung weist der Reflektor ein Montagemittel zum Halten der Leiterplatte auf.

Die Leiterplatte wird hierbei mittels eines auf einer Unterseite des Reflektors ausgebildeten Montagemittels gehalten. Hierbei kann das Montagemittel beispielsweise ein Clip oder auch mehrere auf der Unterseite der Leiterplatte angeordnete Clips zur Aufnahme und zum Halten der Leiterplatte sein. Der Clip ist hierbei bevorzugt in einem Stück mit dem Reflektor gefertigt und ausgebildet. Der Reflektor mit dem Clip kann hierbei beispielsweise aus einem Kunststoff gefertigt sein. Ein Vorteil besteht darin, dass der einstückig ausgebildete Reflektor mit dem Clip kostengünstig in einem Spritzgussverfahren hergestellt werden kann.

In einer alternativen Ausführungsform ist die Leiterplatte auf die Unterseite des Reflektors geklebt, geschraubt oder vernietet. Beispielsweise kann die Leiterplatte mit doppelseitigem Klebeband auf die Unterseite des Reflektors geklebt und mit dieser verbunden sein. Je nachdem, was für das konkrete Projekt und den Anwendungsfall der Hintergrundbeleuchtung gefordert wird, kann die Leiterplatte auch auf die Unterseite des Reflektors geschraubt oder vernietet sein.

Ein Vorteil besteht darin, dass durch die direkt auf die Unterseite des Reflektors montierte Leiterplatte, die mittels dem Montagemittel gehalten wird, eine erhöhte mechanische Stabilität erreicht wird. Die Leiterplatte und der Reflektor, die plan aufeinander aufliegen und miteinander verbunden sind, stabilisieren sich hierbei gegenseitig.

Ein weiterer Vorteil besteht darin, dass auf ein weiteres Bauteil, bspw. ein zusätzliches Gehäuse für die Hintergrundbeleuchtung, welches zur Aufnahme und Stabilisierung der zu verbindende Bauteile dient, verzichtet werden kann, wodurch eine flachere Aufbauhöhe der Hintergrundbeleuchtung ermöglicht wird. Zudem lassen sich die zu verbindenden Bauteile einfach und schnell montieren sowie demontieren.

Gemäß einem Aspekt der Erfindung weist die Leiterplatte ein Wärmeleitblech auf.

Die Hintergrundbeleuchtung besteht im montierten Zustand aus einer über dem Wärmeleitblech angeordneten Leiterplatte mit den darauf angeordneten Lichtquellen und einem über der Leiterplatte und den Lichtquellen angeordneten Reflektor. Damit Langlebigkeit der Lichtquellen und der Anzeigevorrichtung gewährt wird, wird die von den Lichtquellen erzeugte Wärme mittels dem Wärmeleitblech von jeder einzelnen Lichtquelle abgeführt. Die abgeführte Wärme wird beispielsweise über die Rückseite des Wärmeleitblechs mittels Wärmestrahlung abgegeben. Zudem sorgt das Wärmeleitblech für eine weitere Stabilität der Hintergrundbeleuchtung, insbesondere für den Reflektor.

Gemäß einem Aspekt der Erfindung ist ein Niederhalter für Beleuchtungsfolien vorhanden.

Bei dem Niederhalter handelt es sich um einen Rahmen zum Halten und Positionieren der Beleuchtungsfolien, welche über dem Reflektor angeordnet und montiert sind. Hierdurch kann die Hintergrundbeleuchtung mit allen Bauteilen vormontiert und an einem Stück in die Anzeigevorrichtung eingesetzt werden, wodurch weitere zeitaufwändige Montageschritte entfallen. Hierdurch bedarf es keiner Justierung der einzelnen Bauteile während der Montage in die Anzeigevorrichtung. Gleiches gilt auch bei der Demontage und dem Wechsel bspw. einer defekten Hintergrundbeleuchtung.

Vorzugsweise wird eine erfindungsgemäße Anzeigevorrichtung in einem Fortbewegungsmittel im Automobilbereich eingesetzt. Bei dem Fortbewegungsmittel kann es sich beispielsweise um ein Kraftfahrzeug, einen Personenkraftwagen oder einen Lastkraftwagen, alternativ aber auch um ein Luftfahrzeug, ein Schienenfahrzeug oder ein Wasserfahrzeug handeln.

Weitere Merkmale der vorliegenden Erfindung werden aus der nachfolgenden Beschreibung und den angehängten Ansprüchen in Verbindung mit den Figuren ersichtlich. Vorteilhafte Weiterbildungen der Erfindung ergeben sich zudem auch durch die Merkmale der folgenden Beschreibung sowie den Figuren.

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

### Figurenübersicht

Es zeigen in schematischer, skizzenhafter Darstellung:
- Fig. 1: eine geschnittene Seitenansicht durch eine Anzeigevorrichtung mit einer Ausführungsform eines Reflektors der Hintergrundbeleuchtung;
- Fig. 2: eine geschnittene Seitenansicht durch eine Anzeigevorrichtung mit einer zweiten Ausführungsform eines Reflektors der Hintergrundbeleuchtung;
- Fig. 3: eine geschnittene Seitenansicht durch eine Anzeigevorrichtung mit einer dritten Ausführungsform eines Reflektors der Hintergrundbeleuchtung;
- Fig. 4: eine geschnittene Seitenansicht durch eine Anzeigevorrichtung mit einer dritten Ausführungsform eines Reflektors der Hintergrundbeleuchtung; und
- Fig. 5: ein Fortbewegungsmittel, das eine erfindungsgemäße Anzeigevorrichtung nutzt.

### Figurenbeschreibung

Die vorliegende Beschreibung veranschaulicht die Grundsätze der vorliegenden Offenbarung. Es versteht sich daher, dass der Fachmann in der Lage sein wird, verschiedene Anordnungen zu entwickeln, die, obwohl sie hierin nicht ausdrücklich beschrieben oder gezeigt werden, die Prinzipien der Offenbarung verkörpern.

Alle Beispiele und bedingten Formulierungen, die hierin angeführt werden, sind für Bildungszwecke bestimmt, um dem Leser zu helfen, die Prinzipien der Offenbarung und die Konzepte zu verstehen, die vom Erfinder zur Förderung des Fachgebiets beigetragen wurden, und sind so auszulegen, dass sie ohne Einschränkung auf solche spezifisch angeführten Beispiele und Bedingungen sind.

Darüber hinaus sollen alle hierin enthaltenen Aussagen zu Prinzipien, Aspekten und Ausführungsformen der Offenbarung sowie spezifische Beispiele davon, sowohl strukturelle als auch funktionale Äquivalente davon umfassen. Darüber hinaus ist beabsichtigt, dass solche Äquivalente sowohl derzeit bekannte Äquivalente als auch in der Zukunft entwickelte Äquivalente umfassen, d. h. alle entwickelten Elemente, die unabhängig von ihrer Struktur die gleiche Funktion erfüllen.

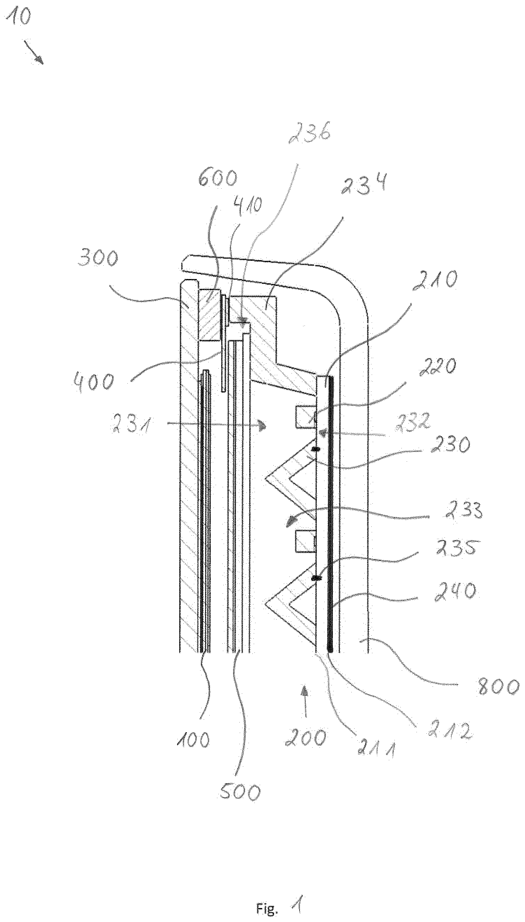

Fig. 1 zeigt schematisch eine geschnittene Seitenansicht durch eine Anzeigevorrichtung 10. Dabei zeigt Fig. 1 eine Detailansicht einer Ausführungsform eines Reflektors 230 mit einem Befestigungselement 234 der Hintergrundbeleuchtung 200 der Anzeigevorrichtung 10.

Die Anzeigevorrichtung 10 weist ein Anzeigepaneel 100 auf, das mit einem Frontglas 300 (auch als Deckglas bezeichnet) verklebt ist. Das Frontglas 300 schließt ein Gehäuse 800 der Anzeigevorrichtung 10 von der Umgebung ab. Das Frontglas 300 ist mit dem Gehäuse 800 verklebt. Die in der Anzeigevorrichtung 10 angeordnete Hintergrundbeleuchtung 200 wird somit umschlossen und geschützt.

Die Hintergrundbeleuchtung 200 zur Hinterleuchtung des Anzeigepaneels 100 umfasst mehrere übereinander angeordnete Bauteile, die im montierten Zustand miteinander verbunden sind. Die einzelnen übereinander angeordneten und miteinander verbundenen Bauteile der Hintergrundbeleuchtung 200 werden als Baugruppe vormontiert, bevor sie dann in das Gehäuse 800 der Anzeigevorrichtung 10 eingesetzt und durch das Frontglas 300 mit dem daran montierten Anzeigepaneel 100 verschlossen wird.

In einer alternativen Ausführungsform kann die Baugruppe der Hintergrundbeleuchtung 200 auch direkt mit dem Frontglas 300 und dem daran montierten Anzeigepaneel 100 verbunden werden, bevor es dann in das Gehäuse 800 der Anzeigevorrichtung 10 eingesetzt wird.

Die Hintergrundbeleuchtung umfasst ein Wärmeleitblech 240, dass auf einer Unterseite 212 der Leiterplatte 210 (engl. Printed Circuit Board, kurz PCB) angeordnet und montiert ist. Das Wärmeleitblech 240 wird auf die Unterseite der Leiterplatte 212 geklebt. Die Leiterplatte 210 dient als Trägerelement für das Wärmeleitblech 240. Auf einer Oberseite 211 der Leiterplatte 210 sind mehrere Lichtquellen 220, typischerweise Leuchtdioden (engl. light-emitting diode, kurz LED) angeordnet. Die Lichtquellen 220 sind in einer Matrixstruktur angeordnet. Weiter ist auf der Oberseite der Leiterplatte 211 der Reflektor 230, der eine Vielzahl von Kavitäten 233 aufweist, angeordnet und montiert. Die Kavitäten 230 sind hierbei in einer Matrixstruktur angeordnet. Jede der Kavitäten 233 des Reflektors 230 nimmt im montierten Zustand mit der Leiterplatte 210 mindestens eine Lichtquelle 220 auf und umschließt diese seitlich. Somit werden die einzelnen Lichtquellen 220 räumlich voneinander getrennt. Der Reflektor 230 weist auf der Unterseite 232 ein Montagemittel 235 auf, wodurch die Leiterplatte 210 mit dem Reflektor 230 verbunden ist. Der Reflektor 230 dient hierbei als Trägerelement für die Leiterplatte 210 und das an der Leiterplatte montierte Wärmeleitblech 240.

In der dargestellten Ausführungsform weist der Reflektor 230 ein seitlich am Reflektor angeordnetes Befestigungselement 234 auf, wobei der Reflektor 230 mehrere hier nicht gezeigte Befestigungselemente 234 aufweisen kann. Die einzelnen Befestigungselemente 234 sind dabei auf zwei gegenüberliegenden Seiten an dem Reflektor 210 in Richtung des Gehäuses 800 der Anzeigevorrichtung 10 angeordnet. In einer alternativen nicht dargestellten Ausführungsform können auch mehrere Befestigungselemente 234 rundherum, je nach Ausgestaltung des Gehäuses 800, am Reflektor 230 gegenüberliegend oder versetzt angeordnet sein.

Gemäß einer Ausführungsform befindet sich das Befestigungselement 234 des Reflektors 230 umlaufend um den Bereich, in dem sich die Kavitäten 233 des Reflektors 230 befinden, im Randbereich der Leiterplatte 210. Dabei ragt das Befestigungselement 234 vorzugsweise über die von der Leiterplatte 210 definierte Fläche hinaus.

Das Befestigungselement 234, welches auf der Oberseite des Reflektors 231 und mit diesem einstückig ausgebildet ist, weist in Richtung des Frontglas 300 mit dem Anzeigepaneel 100 eine Stufe 236 auf, die Beleuchtungsfolien 500 trägt. Bei den Beleuchtungsfolien 500 handelt es sich um einen optischen Folienstapel. Die einzelnen Folien des optischen Folienstapels haben die Aufgabe, das Licht des Reflektors 230 so zu streuen, zu sammeln oder zu lenken, dass die Anforderungen an die Lichtverteilung der Hintergrundbeleuchtung 200 für eine homogene Hinterleuchtung des Anzeigepaneels 100 erfüllt sind. Typische Folien für die Lichtmanipulation sind Helligkeitsverstärkungsfolien (engl. Brightness Enhancement Films, kurz BEF) und Lichtregelungsfolien (engl. Light Control Films, kurz LCF).

Die Beleuchtungsfolien 500 werden im montierten Zustand mit der Hintergrundbeleuchtung 200 mittels eines Niederhalters 400 in ihrer Position gehalten. Der Niederhalter 400, der hier in der Form eines Rahmens ausgebildet ist, ist hierbei durch ein Verbindungsmittel 410, z.B. einer Verklebung, mit dem Befestigungselement 234 des Reflektors 230 verbunden.

Das Frontglas 300 mit dem Anzeigepaneel 100 ist durch ein Verbindungsmittel 600, z.B. einer Verklebung, wiederum mit dem Niederhalter 400 und der Hintergrundbeleuchtung 200 verbunden.

Zwischen dem Gehäuse 800 und der Hintergrundbeleuchtung 200 besteht im montierten Zustand ein Spalt, wodurch eine bessere Wärmeverteilung in der Anzeigevorrichtung 10 erreicht wird.

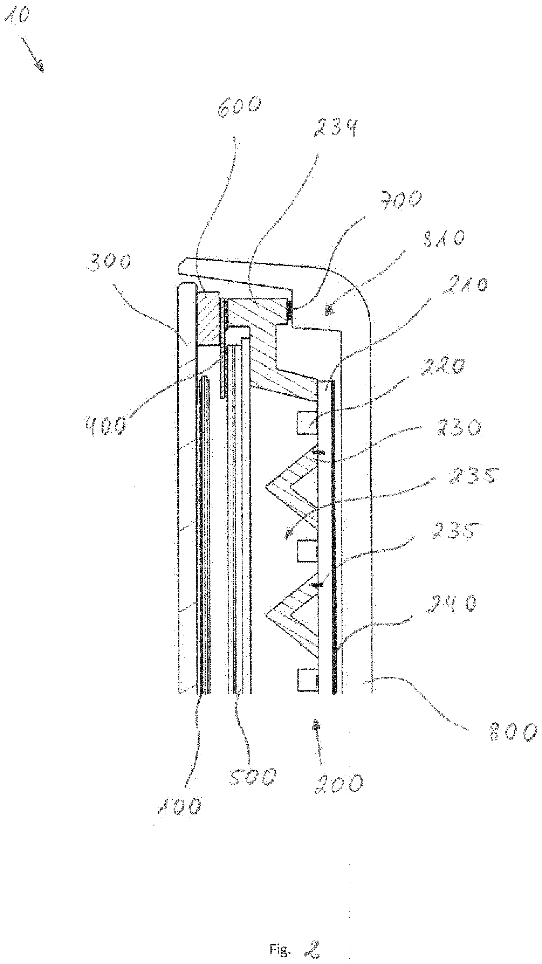

Fig. 2 zeigt schematisch eine geschnittene Seitenansicht durch eine Anzeigevorrichtung 10. Dabei zeigt Fig. 2 eine Detailansicht einer zweiten Ausführungsform eines Reflektors 230 mit einem Befestigungselement 234 der Hintergrundbeleuchtung 200 der Anzeigevorrichtung 10.

Dargestellt ist eine Anzeigevorrichtung 10, die ein Anzeigepaneel 100 aufweist, das mit einem Frontglas 300 verklebt ist. Das Frontglas 300 schließt ein Gehäuse 800 der Anzeigevorrichtung 10 von der Umgebung ab. Somit wird eine in der Anzeigevorrichtung 10 montierte Hintergrundbeleuchtung 200 umschlossen und geschützt.

Diese zweite Ausführungsform entspricht weitestgehend der Ausführungsform aus Fig. 1. Allerdings ist das Befestigungselement 234 des Reflektors 230 so ausgebildet, dass das Befestigungselement 234 ein weiteres Verbindungsmittel 700 aufweist und direkt mit dem Gehäuse 800 der Anzeigevorrichtung 10 verbunden ist. Das Gehäuse 800 weist hierzu eine Stufe 810 auf, auf der das Befestigungselement 234 im montierten Zustand aufliegt. Das Befestigungselement 234 ist durch ein Verbindungsmittel 700, z.B. eine Verklebung, mit der Stufe des Gehäuses 810 fest verbunden.

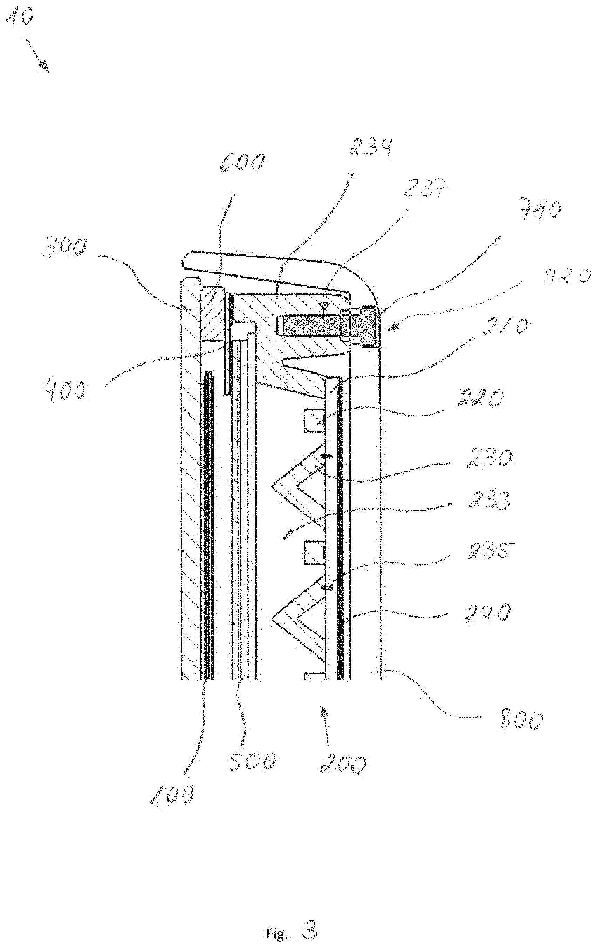

Fig. 3 zeigt schematisch eine geschnittene Seitenansicht durch eine Anzeigevorrichtung 10. Dabei zeigt Fig. 3 eine Detailansicht einer dritten Ausführungsform eines Reflektors 230 mit einem Befestigungselement 234 der Hintergrundbeleuchtung 200 der Anzeigevorrichtung 10.

Dargestellt ist eine Anzeigevorrichtung 10, die ein Anzeigepaneel 100 aufweist, das mit einem Frontglas 300 verklebt ist. Das Frontglas 300 schließt ein Gehäuse 800 der Anzeigevorrichtung 10 von der Umgebung ab. Somit wird eine in der Anzeigevorrichtung 10 montierte Hintergrundbeleuchtung 200 umschlossen und geschützt.

Diese dritte Ausführungsform entspricht weitestgehend der Ausführungsform aus Fig. 1. Allerdings ist das Befestigungselement 234 des Reflektors 230 so ausgebildet, dass das Befestigungselement 234 direkt mit dem Gehäuse 800 der Anzeigevorrichtung 10 verbunden ist. Das Befestigungselement 234 weist hierzu eine dickere Wandstärke wie in Fig. 1 gezeigt auf. In dem Befestigungselement 234 ist eine Ausnehmung 237, bevorzugt als Sackloch, ausgebildet. Die Ausnehmung 237 kann hierbei wiederum ein nicht dargestelltes Innengewinde aufweisen.

In dem Gehäuse 800 ist eine Ausnehmung 820 ausgebildet. Durch ein Verbindungsmittel 710, z.B. einer Schraube, welches in die Ausnehmung 820 eingesteckt ist, ist das das Gehäuse 800 fest mit dem Befestigungselement 234 verbunden. Das Befestigungselement 234 liegt im montierten Zustand plan auf dem Gehäuse 800 auf.

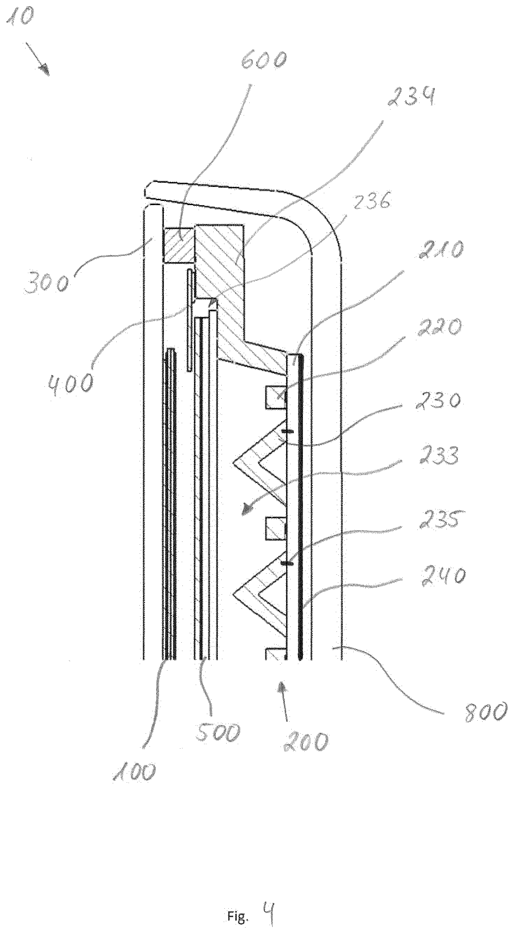

Fig. 4 zeigt schematisch eine geschnittene Seitenansicht durch eine Anzeigevorrichtung 10. Dabei zeigt Fig. 4 eine Detailansicht einer vierten Ausführungsform eines Reflektors 230 mit einem Befestigungselement 234 der Hintergrundbeleuchtung 200 der Anzeigevorrichtung 10.

Dargestellt ist eine Anzeigevorrichtung 10, die ein Anzeigepaneel 100 aufweist, das mit einem Frontglas 300 verklebt ist. Das Frontglas 300 schließt ein Gehäuse 800 der Anzeigevorrichtung 10 von der Umgebung ab. Somit wird eine in der Anzeigevorrichtung 10 montierte Hintergrundbeleuchtung 200 umschlossen und geschützt.

Diese vierte Ausführungsform entspricht weitestgehend der Ausführungsform aus Fig. 1. Allerdings ist das Befestigungselement 234 des Reflektors 230 so ausgebildet, dass es eine größere Oberfläche aufweist, auf der ein Niederhalter 400 und ein Verbindungsmittel 600 nebeneinander in Richtung des Frontglases 300 mit dem Anzeigepaneel 100 angeordnet sind, und nicht wie in Fig. 1 übereinander gestapelt sind. Dies ermöglicht eine geringere Bauhöhe.

Der Niederhalter 400 ist hierbei durch Verkleben mit dem Befestigungselement 234 des Reflektors 230 verbunden und hält Beleuchtungsfolien 500 in einer Stufe 236 gegen ein Verrutschen in ihrer Position fest.

Das Frontglas 300 mit dem Anzeigepaneel 100 ist durch ein Verbindungsmittel 600, im bevorzugten Ausführungsbeispiel durch eine Verklebung, direkt mit dem Befestigungselement 234 des Reflektors 230 verbunden. Dies hat den Vorteil, dass bei einem Austausch bspw. des Frontglases 300 mit dem Anzeigepaneel 100 nur eine Verbindungsstelle 600 gelöst werden muss, ohne dass weiter Verbindungsstellen oder Bauteile der Anzeigevorrichtung 200 beschädigt oder neu justiert werden müssen.

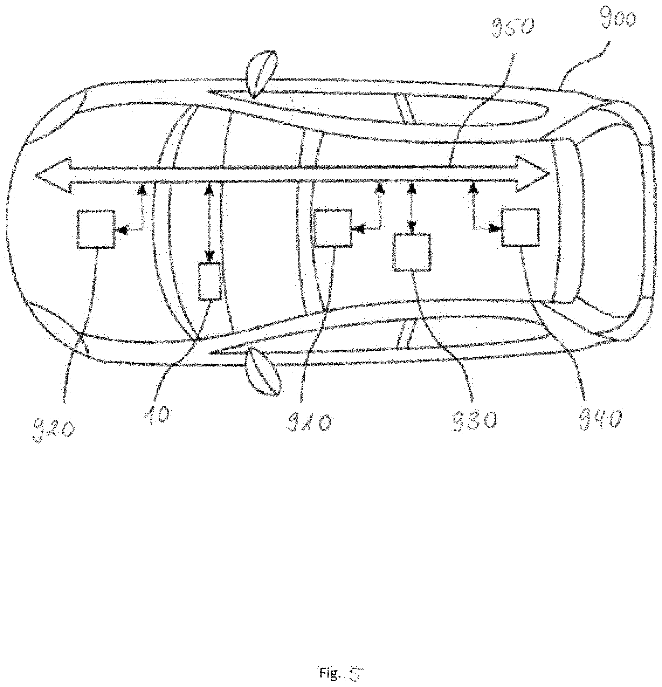

Fig. 5 zeigt schematisch ein Fortbewegungsmittel 900, das eine erfindungsgemäße Anzeigevorrichtung 10 nutzt. Bei dem Fortbewegungsmittel 900 handelt es sich in diesem Beispiel um ein Kraftfahrzeug. Das Kraftfahrzeug weist eine erfindungsgemäße Anzeigevorrichtung 10 auf, die in einer Armaturentafel angeordnet ist. Mit einer Sensorik 910 können Daten zur Fahrzeugumgebung erfasst werden. Die Sensorik 910 kann insbesondere Sensoren zur Umfelderkennung umfassen, z.B. Ultraschallsensoren, Laserscanner, Radarsensoren, Lidarsensoren oder Kameras. Die von der Sensorik 910 erfassten Informationen können genutzt werden, um anzuzeigende Inhalte für die Anzeigevorrichtung 10 zu generieren. Weitere Bestandteile des Kraftfahrzeugs sind in diesem Beispiel ein Navigationssystem 920, durch das Positionsinformationen bereitgestellt werden können, sowie eine Datenübertragungseinheit 930. Mittels der Datenübertragungseinheit 930 kann z.B. eine Verbindung zu einem Backend aufgebaut werden, beispielsweise um aktualisierte Software für Komponenten des Kraftfahrzeugs zu beziehen. Zur Speicherung von Daten ist ein Speicher 940 vorhanden. Der Datenaustausch zwischen den verschiedenen Komponenten des Kraftfahrzeugs erfolgt über ein Netzwerk 950.

Insgesamt zeigt das Ausführungsbeispiel, wie durch die Erfindung in einfacher Weise eine verbesserte Anzeigevorrichtung mit einer Hintergrundbeleuchtung und ein Fortbewegungsmittel mit einer solchen Anzeigevorrichtung ausgebildet sein kann, wobei eine flache Aufbauhöhe der Hintergrundbeleuchtung mit einer gleichmäßigen Ausleuchtung der Anzeigevorrichtung erreicht wird.

### Bezugszeichenliste

- 10: Anzeigevorrichtung
- 100: Anzeigepaneel
- 200: Hintergrundbeleuchtung
- 210: Leiterplatte
- 211: Oberseite
- 212: Unterseite
- 220: Lichtquelle
- 230: Reflektor
- 231: Oberseite
- 232: Unterseite
- 233: Kavität
- 234: Befestigungselement
- 235: Montagemittel
- 236: Stufe
- 237: Ausnehmung
- 240: Wärmeleitblech
- 300: Frontglas
- 400: Niederhalter
- 410: Verbindungsmittel
- 500: Beleuchtungsfolien
- 600: Verbindungsmittel
- 700: Verbindungsmittel
- 710: Verbindungsmittel
- 800: Gehäuse
- 810: Stufe
- 820: Ausnehmung
- 900: Fortbewegungsmittel
- 910: Sensorik
- 920: Navigationssystem
- 930: Datenübertragungseinheit
- 940: Speicher
- 950: Netzwerk

## Patentansprüche

1. Anzeigevorrichtung (10) mit einem Anzeigepaneel (100) und einer Hintergrundbeleuchtung (200) für das Anzeigepaneel (100),
wobei die Hintergrundbeleuchtung (200) einen Reflektor (230) mit einer Vielzahl von reflektierend ausgestalteten Kavitäten (233) aufweist, und eine Leiterplatte (210), die eine Vielzahl von Lichtquellen (220) aufweist, wobei die Lichtquellen (220) in den jeweiligen Kavitäten (233) des Reflektors (230) angeordneten sind,
**dadurch gekennzeichnet,**
**dass** der Reflektor (230) ein Befestigungselement (234) aufweist.

2. Anzeigevorrichtung (10) nach Anspruch 1, **dadurch gekennzeichnet, dass** der Reflektor (230) und das Befestigungselement (234) einstückig ausgebildet sind.

3. Anzeigevorrichtung (10) nach einem der vorherigen Ansprüche 1 und 2,
**dadurch gekennzeichnet, dass** das Befestigungselement (234) kraft- und/oder stoff- und/oder formschlüssig mit einem Gehäuse (800) verbindbar ist.

4. Anzeigevorrichtung (10) nach einem der vorherigen Ansprüche 1 bis 3,
**dadurch gekennzeichnet, dass** der Reflektor (230) ein Montagemittel (235) zum Halten der Leiterplatte (210) aufweist.

5. Anzeigevorrichtung (10) nach einem der vorherigen Ansprüche 1 bis 4,
**dadurch gekennzeichnet, dass** die Leiterplatte (210) ein Wärmeleitblech (240) aufweist.

6. Anzeigevorrichtung (10) nach einem der vorherigen Ansprüche 1 bis 5,
**dadurch gekennzeichnet, dass** ein Niederhalter (400) für Beleuchtungsfolien (500) vorhanden ist.

7. Fortbewegungsmittel (900) mit einer Anzeigevorrichtung (10) gemäß einem der vorherigen Ansprüche.
